# EUROPÄISCHE PATENTANMELDUNG

(11) **EP 4 230 471 A1**
(43) Veröffentlichungstag der Anmeldung: **23.08.2023**
(21) Anmeldenummer: 23157837.8
(22) Anmeldetag: 21.02.2023
(51) Int. Cl.: B60L 53/16, B60K 15/05, E05F 15/70

(54) **FAHRZEUG, INSBESONDERE ELEKTRISCH ANTREIBBARES FAHRZEUG**

(30) Priorität: 22.02.2022 DE 102022104155
(71) Anmelder: Valmet Automotive Oy, 23500 Uusikaupunki (FI)
(72) Erfinder: Plassmeyer, Jörg, 49196 Bad Laer (DE)
(74) Vertreter: Kronthaler, Schmidt & Coll.

(57) **Zusammenfassung**

Es wird ein Fahrzeug (1), insbesondere ein elektrisch antreibbares Fahrzeug, mit einer Ladedose (6) zur Anordnung in einer Öffnung (5) einer Fahrzeugkarosserie (2), mit einer Fahrzeugklappe (4) zum Bedecken und Freigeben der Öffnung (5) sowie mit einer Antriebsvorrichtung (9) mit einer Antriebseinheit (10) zum Bewegen der Fahrzeugklappe (4) und der Ladedose (6) beschrieben. Die Fahrzeugklappe (4) ist um eine karosseriefeste Drehachse (DP2) gegenüber der Öffnung (5) zwischen einer Geschlossenstellung, in der die Fahrzeugklappe (4) die Öffnung (5) bedeckt, und einer Offenstellung, in der die Fahrzeugklappe (4) die Öffnung (5) freigibt, im Inneren der Fahrzeugkarosserie (2) verschwenkbar. Die Ladedose (6) ist um eine karosseriefeste Drehachse (DP1) zwischen einer Gebrauchsposition und einer Nichtgebrauchsposition im Inneren der Fahrzeugkarosserie (2) verschwenkbar. Die Ladedose (6) und die Fahrzeugklappe (4) sind über wenigstens ein Koppelelement (7) miteinander verbunden, wobei das Koppelelement (7) jeweils mit der Ladedose (6) und mit der Fahrzeugklappe (4) drehbar in Wirkverbindung steht.

## Beschreibung

Die Erfindung betrifft ein Fahrzeug, insbesondere ein elektrisch antreibbares Fahrzeug, mit einer Ladedose zur Anordnung in einer Öffnung einer Fahrzeugkarosserie, mit einer Fahrzeugklappe zum Bedecken und Freigeben der Öffnung sowie mit einer Antriebsvorrichtung mit einer Antriebseinheit zum Bewegen der Fahrzeugklappe und der Ladedose.

Aus der DE 10 2012 022 101 A1 ist eine Anschlussvorrichtung zum Laden einer Antriebsbatterie eines elektrisch betreibbaren Kraftwagens bekannt. Eine Ladebuchse ist innerhalb einer Lademulde aufgenommen. Über eine nach außen weisende Öffnung der Lademulde ist die Ladebuchse teilweise aus der Lademulde herausklappbar. Dabei ist die Ladebuchse um eine Schwenkachse zwischen der ersten und der zweiten Stellung verschwenkbar. Um die Öffnung in der ersten Stellung der Ladebuchse zu verschließen, ist eine Klappe vorgesehen, welche um eine sich in Fahrzeugquerrichtung erstreckende Schwenkachse verschwenkbar gehalten ist. Die Klappe ist über eine Koppeleinrichtung mit der Ladebuchse gekoppelt und mit dieser bewegbar. Dazu umfasst die Koppeleinrichtung einen an der Ladebuchse angeordneten Stift sowie eine an der Klappe vorgesehene Führung in Form eines Langlochs, in das der Stift eingreift. Der Stift kann sich beim Verschwenken der Ladebuchse und der Klappe im Langloch relativ zur Klappe bewegen. Die Führung in Form des Langlochs ist vorgesehen, da es aufgrund des Abstandes zwischen den Schwenkachsen zu Winkelunterschieden zwischen dem Anschlusselement und der Klappe kommt, wenn die Klappe verschwenkt wird.

Problematisch ist bei dieser bekannten Lösung, dass die Klappe in der Offenstellung von der Außenseite der Fahrzeugkarosserie nach außen ragt, wobei sie z. B. während eines Aufladevorgangs des Fahrzeugs beschädigt werden kann.

Aus der EP 2 646 277 B1 ist eine Ladeschnittstelle für ein Elektrofahrzeug bekannt, welche eine Ladesteckdose mit einem entsprechenden internen Ladekabel zur Verbindung der Ladesteckdose mit einer Traktionsbatterie umfasst. Die Ladesteckdose ist verschiebbar in einer Aufnahmeeinrichtung angeordnet, die in das Fahrzeuginnere reicht. Ferner ist die Ladesteckdose mittels einer Mechanik mit einem als Verschlussdeckel wirkenden Deckel verbunden, welcher in seiner Geschlossenstellung mit einer Karosserieoberfläche bündig abschließt.

Beim Öffnen des Deckels wird dieser gegenüber der Außenseite der Fahrzeugkarosserie nach außen verschwenkt. Gleichzeitig wird durch das Öffnen des Deckels die Ladesteckdose einschließlich dem internen Ladekabel mittels der Mechanik innerhalb der Aufnahmeeinrichtung in Richtung Karosserieoberfläche bewegt. In einem weiteren Schritt des Deckelöffnungsvorgangs wird dieser in seiner verschwenkten Stellung linear in eine schlitzartige Aufnahmeaussparung im Inneren der Fahrzeugkarosserie geschoben und darin mit einem dem Fahrzeuginneren zugewandten Abschnitt während des Einsteckens des Ladekabels teilweise verstaut. Die Mechanik ist dazu entsprechend ausgestaltet und mit einem Gelenk versehen. Durch das Schließen des Deckels wird die Ladesteckdose mit angeschlossenem Ladestecker wieder in die Aufnahmeeinrichtung hineingeschoben. Dann schließt der Deckel wieder bündig mit der Karosserieoberfläche ab, wobei durch eine Aussparung im unteren Bereich des Deckels das externe Ladekabel nach außen geführt und gesichert wird.

Nachteilhafterweise überragt der Deckel in geöffnetem Zustand der Ladeschnittstelle die Außenseite der Fahrzeugkarosserie und schränkt dabei unter anderem das Blickfeld einer Bedienperson auf die Ladesteckdose während des Einsteckvorgangs des Ladesteckers ein. Des Weiteren kann durch die Aussparung des Deckels, durch die das Ladekabel führbar ist, Feuchtigkeit und Schmutz in das Innere der Fahrzeugkarosserie eintreten.

Es ist eine bevorzugte Aufgabe der erfindungsgemäßen Technologie, zumindest einen Nachteil von einer vorbekannten Lösung zu verringern oder zu beheben oder eine alternative Lösung vorzuschlagen. Es ist insbesondere eine bevorzugte Aufgabe der hier offenbarten Technologie, ein Fahrzeug, insbesondere ein elektrisch antreibbares Fahrzeug, mit einer Ladedose zur Anordnung in einer Öffnung einer Fahrzeugkarosserie, mit einer Fahrzeugklappe zum Bedecken und Freigeben der Öffnung sowie mit einer Antriebsvorrichtung mit einer Antriebseinheit zum Bewegen der Fahrzeugklappe und der Ladedose zur Verfügung zu stellen, die hinsichtlich mindestens eines der folgenden Faktoren verbessert ist: Herstellungszeit, Herstellungskosten, Komplexität der Herstellung, Montageaufwand, Bauraumausnutzung, Betriebssicherheit, Nachhaltigkeit, Bauteilzuverlässigkeit und Widerstandsfähigkeit gegenüber Umwelteinflüssen.

Die Aufgabe/n wird/werden gelöst mit einem Fahrzeug mit den Merkmalen des Patentanspruches 1. Bevorzugte Weiterbildungen ergeben sich aus den Unteransprüchen und der nachfolgenden Beschreibung.

Es wird ein Fahrzeug, insbesondere ein elektrisch antreibbares Fahrzeug, mit einer Ladedose zur Anordnung in einer Öffnung einer Fahrzeugkarosserie, mit einer Fahrzeugklappe zum Bedecken und Freigeben der Öffnung sowie mit einer Antriebsvorrichtung mit einer Antriebseinheit zum Bewegen der Fahrzeugklappe und der Ladedose vorgeschlagen. Erfindungsgemäß ist die Fahrzeugklappe um eine karosseriefeste Drehachse gegenüber der Öffnung zwischen einer Geschlossenstellung, in der die Fahrzeugklappe die Öffnung bedeckt, und einer Offenstellung, in der die Fahrzeugklappe die Öffnung freigibt, im Inneren der Fahrzeugkarosserie verschwenkbar. Die Ladedose ist um eine karosseriefeste Drehachse zwischen einer Gebrauchsposition und einer Nichtgebrauchsposition im Inneren der Fahrzeugkarosserie verschwenkbar. Zusätzlich sind die Ladedose und die Fahrzeugklappe über wenigstens ein Koppelelement miteinander verbunden, wobei das Koppelelement jeweils mit der Ladedose und mit der Fahrzeugklappe drehbar in Wirkverbindung steht.

Bei dem erfindungsgemäßen Fahrzeug besteht die Möglichkeit, mit nur vier Drehachsen, d. h. den karosseriefesten Drehachsen der Fahrzeugklappe und der Ladedose sowie den beiden im Raum verstellbaren Drehachsen zwischen dem Koppelelement und der Fahrzeugklappe und der Ladedose, und mit nur einem einzigen Antrieb gleichzeitig die Fahrzeugklappe zu öffnen und die Ladesteckdose bzw. die Ladedose in ihre Gebrauchsposition zu überführen. Hierfür sind im Vergleich zu herkömmlich ausgeführten Fahrzeugen keinerlei Führungselemente erforderlich, die im Betrieb eines Fahrzeugs verschmutzen bzw. vereisen können.

Durch den Stellmechanismus des erfindungsgemäßen Fahrzeugs sind die Fahrzeugklappe und die Ladesteckdose für eine Bedienperson wechselweise von außen sichtbar.

Zusätzlich besteht die Möglichkeit, die zum Verstellen der Ladedose und der Fahrzeugklappe vorgesehene Kinematik durch einfache Längenanpassungen, beispielsweise durch Verändern des Abstandes der karosseriefesten Drehachsen der Fahrzeugklappe und der Ladedose zueinander, an verschiedene Anwendungsfälle bzw. Fahrzeugsysteme anzupassen.

Des Weiteren ist das erfindungsgemäße Fahrzeug im Bereich seiner Ladeschnittstelle im Vergleich zu bekannten Fahrzeugsystemen durch eine geringe Bauteilanzahl gekennzeichnet, wodurch sich die Herstellkosten, der Montageaufwand und auch das Fahrzeuggesamtgewicht gegenüber den bekannten Lösungen reduzieren.

Das erfindungsgemäße Fahrzeug zeichnet sich durch eine einfache kinematische Lösung aus, bei der mittels eines einfachen Mehrgelenkscharniers, beispielsweise eines Viergelenk-Mechanismus, die Öffnungs- bzw. Schließbewegung der Fahrzeugklappe mit der Bewegung der Ladedose gekoppelt wird. In den Ausgangslagen der Fahrzeugklappe und der Ladedose wird die Öffnung zum Aufladen des Fahrzeugs durch die Fahrzeugklappe abgedeckt und die Ladedose ist in der sogenannten Nichtgebrauchsstellung nach innen bzw. in das Fahrzeuginnere der Fahrzeugkarosserie verschwenkt sowie von außen nicht sichtbar. Sowohl die Fahrzeugklappe als auch die Ladedose sind an der Fahrzeugkarosserie drehbar gelagert und gegenüber dieser bewegbar.

Die Bewegungen der Fahrzeugklappe und auch der Ladesteckdose sind ohne Langlöcher, Kulissenführungen oder dergleichen realisierbar.

Indem die erfindungsgemäße Anordnung und Bewegungsführung von Ladedose und Fahrzeugklappe ein Verschwenken der Ladedose im Inneren der Fahrzeugkarosserie und in das Innere der Fahrzeugkarosserie hinein erlauben, wird auch die Gefahr von Vandalismus beim Ladevorgang z. B. im öffentlichen Raum reduziert. Zusätzlich ist durch die Anordnung ein möglichst weites Hervorbringen der Ladedose aus dem Inneren der Fahrzeugkarosserie darstellbar, um einer Bedienperson ein möglichst einfaches Einstecken eines externen Ladesteckers in die Ladedose zu ermöglichen.

Bei einer konstruktiv einfachen und mit geringem Aufwand realisierbaren Ausführungsform des erfindungsgemäßen Fahrzeugs ist die Antriebseinheit an der Fahrzeugklappe oder an der Ladedose befestigt und treibt das Koppelelement im Bereich eines Drehgelenkes rotatorisch an, das das Koppelelement und die Fahrzeugklappe oder das Koppelelement und die Ladedose drehbar miteinander verbindet.

Alternativ hierzu besteht auch die Möglichkeit, die Antriebseinheit am Koppelelement zu befestigen und die Fahrzeugklappe oder die Ladedose jeweils im Bereich eines Drehgelenkes rotatorisch anzutreiben, das das Koppelelement und die Fahrzeugklappe oder das Koppelelement und die Ladedose drehbar miteinander verbindet.

Die Antriebseinheit kann auch an der Fahrzeugkarosserie befestigt sein und über eine Kinematik mit dem Koppelelement in Verbindung stehen sowie das Koppelelement beispielsweise rotatorisch antreiben. Der Antrieb der Antriebseinheit kann dann vom Koppelelement auf die Fahrzeugklappe und auf die Ladedose über ein Drehgelenk zwischen dem Koppelelement und der Ladedose sowie über ein Drehgelenk zwischen dem Koppelelement und der Fahrzeugklappe übertragen werden.

Eine Verstellung der Ladedose und eine Verstellung der Fahrzeugklappe durch das Koppelelement können so aufeinander abgestimmt sein, dass die Ladedose in der Offenstellung der Fahrzeugklappe in ihrer Gebrauchsposition und in der Geschlossenstellung der Fahrzeugklappe in ihrer Nichtgebrauchsposition anordenbar ist. Dabei ist es zweckmäßig, wenn ein Abstand in Fahrzeugquerrichtung zwischen einer Vorderseite der Ladedose, die einer Außenseite der Fahrzeugkarosserie zugewandt ist, und der Außenseite der Fahrzeugkarosserie in der Gebrauchsposition der Ladedose kleiner ist als in der Nichtgebrauchsposition der Ladedose. Damit ist wiederum mit geringem konstruktivem Aufwand gewährleistet, dass ein elektrischer Stecker von einer Bedienperson einfach in die Ladedose einsteckbar bzw. aus dieser entnehmbar ist.

Bei einer weiteren Ausführungsform des erfindungsgemäßen Fahrzeugs, die mit einer einfachen kinematischen Kette ausgeführt ist, sind die fahrzeugfesten bzw. karosseriefesten Drehachsen der Fahrzeugklappe und der Ladedose parallel zueinander ausgerichtet.

Falls es aus fahrzeugseitigen geometrischen Gegebenheiten zweckmäßig ist, können die karosseriefesten Drehachsen der Fahrzeugklappe und der Ladesteckdose auch verschränkt zueinander verlaufen.

Im Vergleich zur parallelen Ausführung der karosseriefesten Drehachsen der Fahrzeugklappe und der Ladesteckdose erfordert eine verschränkte Anordnung der karosseriefesten Drehachse zueinander eine konstruktiv aufwändigere Kinematik. Zusätzlich sind die drehbaren Anbindungen des Koppelelementes an die Fahrzeugklappe und an die Ladedose jeweils mit größeren Freiheitsgraden auszuführen und können beispielsweise Kugelgelenke umfassen.

Die Fahrzeugklappe kann in der Geschlossenstellung und in der Offenstellung und die Ladedose kann in der Gebrauchsposition und in der Nichtgebrauchsposition jeweils über eine Verriegelungseinheit gehalten werden. Mittels einer solchen Verriegelungseinheit können unerwünschte Lageveränderungen der Fahrzeugklappe und der Ladedose insbesondere während eines normalen Fahrbetriebes des Fahrzeugs oder auch durch Fremdeinwirkung im Parkbetriebszustand auf einfache Art und Weise vermieden werden.

Des Weiteren besteht die Möglichkeit, dass die Wirkverbindungen und Positionen der Wirkverbindungen zwischen der Fahrzeugkarosserie, der Ladedose, der Fahrzeugklappe und dem Koppelelement so aufeinander abgestimmt sind, dass die Fahrzeugklappe in der Geschlossenstellung und in der Offenstellung und die Ladedose in der Gebrauchsposition und in der Nichtgebrauchsposition jeweils durch sogenannte Übertotpunktlagen zwischen der Drehachse der Fahrzeugklappe, der Wirkverbindung zwischen der Fahrzeugklappe und dem Koppelelement, der Wirkverbindung zwischen der Ladedose und dem Koppelelement sowie der Drehachse der Ladedose verriegelt gehalten sind.

Darüber hinaus besteht auch die Möglichkeit, dass die Antriebsvorrichtung derart selbsthemmend ausgeführt ist, dass die Fahrzeugklappe in der Geschlossenstellung und in der Offenstellung und die Ladedose in der Gebrauchsposition und in der Nichtgebrauchsposition von der Antriebsvorrichtung gehalten werden, wenn der Antrieb der Antriebsvorrichtung abgeschaltet ist.

Die Fahrzeugklappe, die Ladedose und/oder die Fahrzeugkarosserie können mit einer Dichteinheit ausgeführt sein, die in der Geschlossenstellung der Fahrzeugklappe sowie in der Gebrauchsstellung der Ladedose einen Anlagebereich der Fahrzeugklappe an der Fahrzeugkarosserie und einen Anlagebereich der Ladedose an der Fahrzeugkarosserie abdichtet.

Beispielsweise kann die Fahrzeugklappe umlaufend mit einer Dichtung bzw. mit einer Dichtlippe versehen sein, die den Spalt zur umgebenden Karosserie abdeckt. Ebenso kann die Ladedose bzw. deren Aufnahme umlaufend mit einer Dichtung bzw. einer Dichtlippe ausgeführt sein, die den Spalt in der Gebrauchsstellung der Ladedose zur umgebenden Karosserie abdeckt. Dadurch wird ein Schmutz- und Nässeeintrag in den Bewegungsraum der Fahrzeugklappe und der Ladedose verhindert, wenn die jeweilige Endposition der Fahrzeugklappe oder der Ladedose erreicht ist.

Zusätzlich besteht ebenso die Möglichkeit, dass die Dichtung bzw. die Dichtlippe an der Fahrzeugkarosserie angebracht ist und gegen die Fahrzeugklappe sowie die Ladesteckdose dichtet.

Bei einer weiteren Ausführungsform des erfindungsgemäßen Fahrzeugs können die Ladedose und die Fahrzeugklappe über zwei Koppelelemente drehbar miteinander in Wirkverbindung stehen. Die Koppelelemente können jeweils seitlich mit der Ladedose und mit der Fahrzeugklappe drehbar verbunden sein.

Eine derartige Ausgestaltung ist dadurch gekennzeichnet, dass das Koppelelement doppelt verbaut wird, indem an jeder Seite der Fahrzeugklappe und der Ladedose jeweils ein Koppelelement angebracht wird. Dabei können die Koppelelemente außerhalb des Bewegungsbereiches der Fahrzeugklappe und der Ladedose positioniert sein, und es erfolgt gleichzeitig eine symmetrische Krafteinleitung in das System.

Die Ladeschnittstelle des erfindungsgemäßen Fahrzeugs, die die Fahrzeugklappe und die Ladedose umfasst, kann relativ frei im Fahrzeug positioniert werden. Die karosseriefesten Drehachsen können bei weiteren vorteilhaften Ausführungsformen sowohl waagrecht als auch senkrecht im Fahrzeug angebracht sein. Damit ist eine Öffnungsbewegung der Fahrzeugklappe im Inneren der Fahrzeugkarosserie in Fahrzeughochrichtung nach oben oder nach unten sowie in Fahrzeuglängsrichtung in Richtung der Fahrzeugvorderseite oder in Richtung der Fahrzeughinterseite darstellbar.

Zusätzlich besteht auch die Möglichkeit, im Inneren der Fahrzeugkarosserie jede beliebige Öffnungsbewegung der Fahrzeugklappe und der Ladedose im Raum zu realisieren. Dabei können die Drehachsen in Fahrzeughochrichtung, in Fahrzeugquerrichtung oder in jeder anderen Raumrichtung innerhalb der Fahrzeugkarosserie verlaufen, um die Schwenkbewegungen der Ladedose und der Fahrzeugklappe an den jeweils zur Verfügung stehenden Bauraum anzupassen. Die Ausrichtung der Drehachse der Ladedose erfolgt bevorzugterweise in Abhängigkeit der Orientierung der Drehachse der Fahrzeugklappe.

Die Erfindung ist nicht auf die angegebene Kombination der Merkmale des unabhängigen Anspruches oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch die Verwendung von Bezugszeichen soll den Schutzumfang der Ansprüche nicht beschränken.

Ein Ausführungsbeispiel der Erfindung wird nachfolgend anhand der Zeichnung näher erläutert.

Dabei zeigt:
- Fig. 1: eine vereinfachte dreidimensionale Ansicht eines Fahrzeugs mit einer Ladeschnittstelle, welche eine Fahrzeugklappe zum Verschließen und Freigeben einer Öffnung einer Fahrzeugkarosserie umfasst;
- Fig. 2: einen in der Fig. 1 näher gekennzeichneten Bereich II in einer Seitenansicht und in einem Betriebszustand der Ladeschnittstelle, in dem die Fahrzeugklappe die Öffnung der Fahrzeugkarosserie verschließt, und in dem eine Ladedose der Ladeschnittstelle in ihrer Nichtgebrauchsstellung angeordnet ist;
- Fig. 3: eine der Fig. 2 entsprechende Darstellung des Bereiches II in einem Betriebszustand der Ladeschnittstelle, in dem die Fahrzeugklappe die Öffnung freigibt und in dem die Ladedose nahe ihrer Nichtgebrauchsstellung vorliegt; und
- Fig. 4: eine der Fig. 2 entsprechende Darstellung des Bereiches II in einem Betriebszustand der Ladeschnittstelle, in dem die Fahrzeugklappe in ihrer Offenstellung angeordnet ist und die Ladedose in ihre Gebrauchsstellung verschwenkt ist.

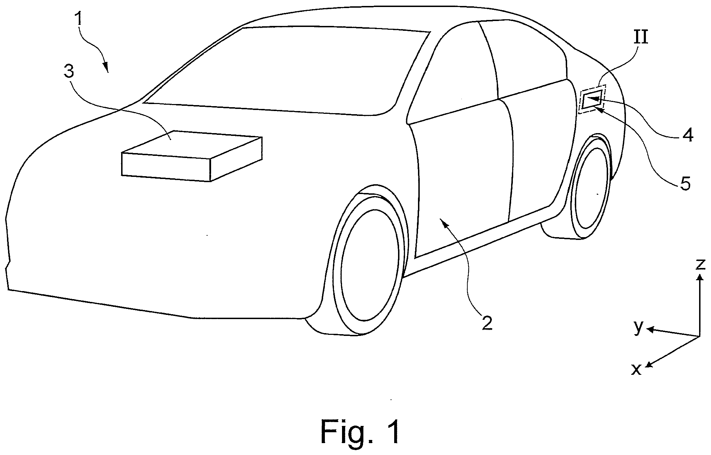

Bezug nehmend auf Fig. 1 ist ein Fahrzeug 1 mit einer Fahrzeugkarosserie 2 und mit einer Antriebseinrichtung 3 gezeigt, wobei die Antriebseinrichtung 3 wenigstens eine elektrische Maschine oder auch eine Kombination aus wenigstens einer Brennkraftmaschine und wenigstens einer elektrischen Maschine umfassen kann.

Vorliegend weist das Fahrzeug 1 heckseitig eine Ladeschnittstelle 13 zum Laden wenigstens einer Antriebsbatterie der Antriebseinrichtung 3 auf, wobei die Ladeschnittstelle 13 an einer Öffnung 5 der Fahrzeugkarosserie 2 angeordnet ist. Die Ladeschnittstelle 13 verbindet das Fahrzeug elektrisch mit einer externen Ladestation, wobei grundsätzlich nicht nur die Stromeinspeisung in Akkumulatoren des Fahrzeugs 1, sondern auch die Stromeinspeisung in umgekehrter Richtung, d. h. vom Fahrzeug 1 in die externe Ladestation möglich sein kann, wobei die externe Ladestation immobil z. B. an einem Gebäude oder mobil z. B. in einem anderen Fahrzeug sein kann.

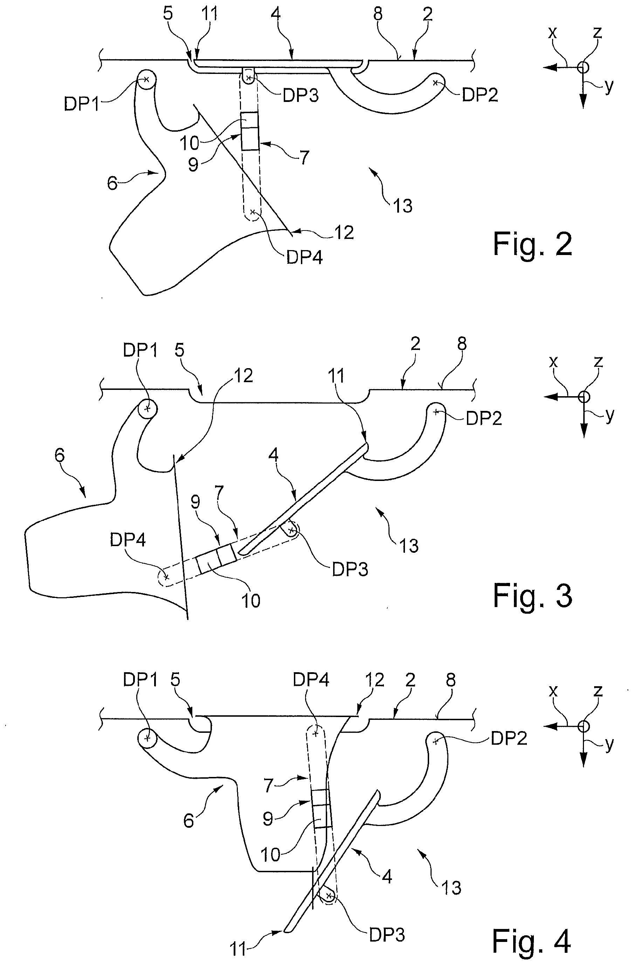

Die Öffnung 5 der Fahrzeugkarosserie 2 stellt eine sogenannte Lademulde dar, durch die ein kabelgebundener externer Ladestecker mit einem passenden Steckersystem in einer in Fig. 2 näher ersichtlichen Ladedose, die innerhalb der Fahrzeugkarosserie 2 bzw. unterhalb der Außenhaut des Fahrzeugs 1 angeordnet ist, in Wirkverbindung bringbar ist, um die Antriebsbatterie des Fahrzeugs 1 z. B. aufladen zu können. Zum Abdecken der Öffnung 5 im Nichtgebrauchszustand der Ladeschnittstelle ist eine Fahrzeugklappe 4 vorgesehen, welche auch als Ladeklappe bezeichnet wird und im Wesentlichen als ein ebenes bzw. plattenartiges Element mit einem Träger ausgeführt ist.

In Fig. 2 ist ein in der Fig. 1 gekennzeichneter Bereich II näher ersichtlich, der die Fahrzeugklappe 4 umfasst. Dabei weist die Fahrzeugklappe 4 einen Betriebszustand auf, in dem die Öffnung 5 vollständig von der Fahrzeugklappe 4 verschlossen ist. Gleichzeitig ist die Ladedose 6 der Ladeschnittstelle 13 in einer Nichtgebrauchsposition angeordnet.

Zusätzlich zeigt Fig. 3 eine der Fig. 2 entsprechende Darstellung des Bereiches II in einem Betriebszustand der Ladeschnittstelle 13, in dem die Öffnung 5 teilweise von der Fahrzeugklappe 4 freigegeben ist und in dem die Fahrzeugklappe 4 teilweise in Fahrzeugquerrichtung y in das Innere der Fahrzeugkarosserie 2 verschwenkt ist. Gleichzeitig ist die Ladedose 6 im Inneren der Fahrzeugkarosserie 2 nach wie vor nahe ihrer Nichtgebrauchsposition angeordnet.

Darüber hinaus zeigt Fig. 4 eine der Fig. 2 entsprechende Darstellung des Bereiches II in einem weiteren Betriebszustand der Ladeschnittstelle 13, in dem die Fahrzeugklappe 4 die Öffnung 5 vollständig freigibt und die Ladedose 6 in ihrer Gebrauchsposition vorliegt.

Die Fahrzeugklappe 4 ist um eine karosseriefeste Drehachse DP2 gegenüber der Öffnung 5 zwischen ihrer Geschlossenstellung und ihrer Offenstellung im Inneren der Fahrzeugkarosserie 2 verschwenkbar. Zudem ist die Ladedose 6 um eine weitere karosseriefeste Drehachse DP1 zwischen ihrer Gebrauchsposition und ihrer Nichtgebrauchsposition im Inneren der Fahrzeugkarosserie 2 verschwenkbar ausgeführt. Die Ladedose 6 und die Fahrzeugklappe 4 sind über ein Koppelelement 7 miteinander verbunden, wobei das Koppelelement 7 jeweils mit der Ladedose 6 und mit der Fahrzeugklappe 4 drehbar in Wirkverbindung steht.

Dabei steht das Koppelelement 7 mit der Fahrzeugklappe 4 im Bereich eines Drehgelenkes drehbar in Wirkverbindung, dessen Drehachse DP3 parallel zu den karosseriefesten Drehachsen DP1 und DP2 verläuft. Zusätzlich ist das Koppelelement 7 mit der Ladedose 6 im Bereich eines weiteren Drehgelenkes drehbar verbunden. Eine Drehachse DP4 des Drehgelenkes zwischen dem Koppelelement 7 und der Ladedose 6 verläuft ebenfalls parallel zu den Drehachsen DP1 bis DP3.

Vorliegend verlaufen die Drehachsen DP1 bis DP4 im Wesentlichen in Fahrzeughochrichtung z in der Fahrzeugkarosserie 2, sodass die Fahrzeugklappe 4 und auch die Ladedose 6 jeweils in Fahrzeugquerrichtung y gegenüber einer Außenhaut 8 bzw. einer Außenseite der Fahrzeugkarosserie 2 verschwenkt werden. Zur Darstellung der Schwenkbewegungen der Fahrzeugklappe 4 und der Ladedose 6 ist eine Antriebsvorrichtung 9 mit einer Antriebseinheit 10 vorgesehen. Die Antriebseinheit 10 kann in Abhängigkeit des vorliegenden Anwendungsfalles als Elektromotor oder auch als Hydraulikmotor ausgeführt sein. Vorliegend ist die Antriebseinheit 10 der Antriebsvorrichtung 9 am Koppelelement 7 befestigt und treibt die Fahrzeugklappe 4 um die Drehachse DP3 rotatorisch an.

Ergeht seitens einer Bedienperson eine Anforderung zum Betätigen der Ladeschnittstelle 13 ausgehend von dem in Fig. 2 dargestellten Betriebszustand, in dem die Fahrzeugklappe 4 die Öffnung 5 verschließt und die Ladedose 6 in ihrer Nichtgebrauchsstellung vorliegt, wird die Antriebseinheit 10 der Antriebsvorrichtung 9 bestromt oder mit Druck beaufschlagt und die Fahrzeugklappe 4 von der Antriebseinheit 10 rotatorisch angetrieben. Der rotatorische Antrieb der Antriebseinheit 10 bewirkt eine Schwenkbewegung der Fahrzeugklappe 4 um die karosseriefeste Drehachse DP2, während der die Fahrzeugklappe 4 in Fahrzeugquerrichtung y in das Innere der Fahrzeugkarosserie 2 hinein verschwenkt wird und die Öffnung 5 zunehmend freigibt.

Mit anderen Worten wird die Fahrzeugklappe 4 in die Offenstellung überführt, wenn ein Wunsch zum Aufladen der Antriebsbatterie des Fahrzeugs 1 erkannt wird. Dabei kann der Wunsch zum Aufladen der Antriebsbatterie durch jedweden Impuls ausgelöst und einem Steuergerät der Antriebsvorrichtung 9 mitgeteilt werden. Der Impuls kann durch einen in der Zeichnung nicht näher dargestellten Sensor erfasst und ausgelöst werden. Dabei besteht die Möglichkeit, dass der Sensor den Wunsch der Bedienperson taktil, anhand einer gestenhaften Bewegung oder auf andere Art und Weise erfasst und entsprechend umsetzt. Ein solcher Sensor kann beispielsweise an der Fahrzeugklappe 4, an der Ladedose 6 sowie im Umfangsbereich der Öffnung 5 der Fahrzeugkarosserie 2 vorgesehen sein.

Zum Öffnen der Fahrzeugklappe 4 wird die Kinematik, die durch die Fahrzeugklappe 4, die Ladedose 6 und das Koppelelement 7 gebildet wird, von der Antriebseinheit 10 betätigt. Dadurch wird die Fahrzeugklappe 4 aus der Geschlossenstellung in die Offenstellung überführt. Gleichzeitig wird die Ladedose 6 aus ihrer Nichtgebrauchsposition zunächst in die in Fig. 3 gezeigte Zwischenposition und anschließend in die Gebrauchsposition verschwenkt, die eine Endlage der Ladedose 6 darstellt. Sobald die Ladedose 6 ihre Gebrauchsposition erreicht hat, ist ein Ladestecker in die Steckdose der Ladedose 6 einsteckbar und die Antriebsbatterie kann beladen werden. Bevorzugt ist die Gebrauchsstellung so gestaltet, dass sie in Fahrzeugquerrichtung y und in Bezug auf die Außenhaut 8 der Fahrzeugkarosserie 2 möglichst weit außen liegt, um den Ladestecker auf einfache Art und Weise mit der Ladedose 6 kontaktieren zu können.

In Abhängigkeit des jeweils vorliegenden Anwendungsfalles besteht auch die Möglichkeit, die Antriebseinheit 10 an der Fahrzeugklappe 4 oder an der Ladedose 6 zu befestigen und das Koppelelement 7 ausgehend von der Fahrzeugklappe 4 oder ausgehend von der Ladedose 6 anzutreiben und die Fahrzeugklappe 4 und die Ladedose 6 im gewünschten Umfang zu verschwenken. Unabhängig von der Anordnung der Antriebseinheit 10 wird das Antriebsmoment der Antriebseinheit 10 im Bereich der Drehachse DP3 oder der Drehachse DP4 in den Verbund bestehend aus der Fahrzeugklappe 4, der Ladedose 6 und dem Koppelelement 7 eingeleitet.

Um jeweils unerwünschte Bewegungen der Fahrzeugklappe 4 und der Ladedose 6 zu vermeiden, werden die Fahrzeugklappe 4 und die Ladedose 6 in ihren Endlagen, d. h. in der Offen- bzw. Geschlossenstellung bzw. in der Gebrauchs- und Nichtgebrauchsposition über eine entsprechende Verriegelung gehalten. Die Verriegelung kann über sogenannte Totpunktlagen der Kinematik der Ladeschnittstelle13, über ein zusätzliches Verriegelungselement oder durch eine entsprechende interne Hemmung im Bereich der Antriebsvorrichtung 9 erfolgen.

Die Fahrzeugklappe 4 ist an ihrem äußeren Randbereich umlaufend mit einer Dichtung 11 versehen, die in der Geschlossenstellung der Fahrzeugklappe 4 einen Spalt zwischen der Fahrzeugklappe 4 und der Fahrzeugkarosserie 2 abdeckt und somit das Innere der Fahrzeugkarosserie 2 bei geschlossener Öffnung 5 abdichtet. Damit wird ein Feuchtigkeits- und Schmutzeintrag auf konstruktiv einfache Art und Weise vermieden, wenn die Öffnung 5 von der Fahrzeugklappe 4 verschlossen ist. Zusätzlich ist auch die Ladedose 6 bzw. deren Aufnahme umlaufend mit einer Dichtung 12 ausgeführt, die in der Gebrauchsstellung der Ladedose 6 einen Spalt zwischen der Ladedose 6 und der umgebenden Fahrzeugkarosserie 2 abdeckt und das Innere der Fahrzeugkarosserie gegenüber der Umgebung des Fahrzeugs 1 abdichtet. Insgesamt wird dadurch ein Schmutz- und Nässeeintrag in den Bewegungsraum der Fahrzeugklappe 4 und der Ladedose 6 verhindert, wenn die jeweiligen Endpositionen der Fahrzeugklappe 4 und der Ladedose 6 erreicht sind.

Alternativ besteht auch die Möglichkeit, dass die Fahrzeugkarosserie 2 im Randbereich der Öffnung 5 mit einer Dichtlippe oder dergleichen ausgebildet ist, um den Innenraum der Fahrzeugkarosserie 2 zusammen mit der von innen an der Fahrzeugkarosserie 2 anliegenden Fahrzeugklappe 4 oder im Verbund mit der von innen anliegenden Ladedose 6 gegenüber der Umgebung des Fahrzeugs 1 abzudichten.

Ist der Ladevorgang der Antriebsbatterie des Fahrzeugs 1 beendet, kann der Ladestecker abgezogen werden, und über einen weiteren Sensorimpuls kann die Fahrzeugklappe 4 geschlossen werden. Während des Schließvorganges der Fahrzeugklappe 4 wird gleichzeitig die Ladedose 6 in ihre Nichtgebrauchsstellung überführt.

In Fig. 2 bis Fig. 4 ist jeweils lediglich eine Seite der Ladeschnittstelle 13 gezeigt, in deren Bereich das Koppelelement 7 vorgesehen ist. Um eine symmetrische Krafteinleitung in das System zu erzielen, ist auf der gegenüberliegenden Seite der Ladeschnittstelle 13 ein weiteres Koppelelement vorgesehen, das in der gleichen Art und Weise wie das Koppelelement 7 drehbar mit der Fahrzeugklappe 4 und der Ladedose 6 verbunden ist. Das bedeutet, dass die Ladeschnittstelle 13 zwei Koppelelemente 7 umfasst, die jeweils seitlich an der Fahrzeugklappe 4 und der Ladedose 6 angebracht sind. Die beiden Koppelelemente 7 sind außerhalb der Bewegungsbereiche der Fahrzeugklappe 4 und der Ladedose 6 positioniert.

Grundsätzlich besteht die Möglichkeit, die Fahrzeugklappe 4, die Ladedose 6 und das Koppelelement bzw. die Koppelelemente 7 mit großen Freiheitsgraden frei im Inneren der Fahrzeugkarosserie 2 zu positionieren und zu verstellen. Die Drehachsen DP1 bis DP4 können sowohl waagrecht als auch senkrecht im Fahrzeug angebracht sein. Damit ist ein Öffnen der Fahrzeugklappe 4 im Inneren der Fahrzeugkarosserie 2 in Fahrzeughochrichtung z nach oben, in Fahrzeughochrichtung z nach unten oder auch in Fahrzeuglängsrichtung x in Richtung der Fahrzeugvorderseite oder der Fahrzeugrückseite möglich.

Darüber hinaus besteht auch die Möglichkeit, die Öffnungsbewegungen der Fahrzeugklappe 4 und der Ladedose 6 in Fahrzeughochrichtung z, in Fahrzeuglängsrichtung x und/oder in Fahrzeugquerrichtung y jeweils an den innerhalb der Fahrzeugkarosserie 2 zur Verfügung stehenden Bauraum angepasst vorzusehen. Entsprechend der Ausrichtung der Drehachse DP2 der Fahrzeugklappe 4 wird dann auch die Drehachse DP1 der Ladedose 6 ausgerichtet.

Die vorstehend näher beschriebene Ausführung der Ladeschnittstelle 13 stellt eine konstruktiv einfache Kopplung der Öffnungsbewegung der Fahrzeugklappe 4 und der Bewegung der Ladedose 6 dar. Die Schwenkbewegungen der Fahrzeugklappe 4 und der Ladedose 6 sind hier ausschließlich über die Drehachsen DP1 bis DP4 zwangsgekoppelt, ohne hierfür konstruktiv aufwändige Führungen zu benötigen. Zudem sind nur vier Drehachsen und nur ein einziger Antrieb erforderlich, um die Fahrzeugklappe 4 und die Ladedose 6 zu betätigen.

### BEZUGSZEICHENLISTE

- 1: Fahrzeug
- 2: Fahrzeugkarosserie
- 3: Antriebseinrichtung
- 4: Fahrzeugklappe
- 5: Öffnung
- 6: Ladedose
- 7: Koppelelement
- 8: Außenhaut
- 9: Antriebsvorrichtung
- 10: Antriebseinheit
- 11: Dichtung
- 12: Dichtung
- 13: Ladeschnittstelle
- DP1: karosseriefeste Drehachse der Ladedose
- DP2: karosseriefeste Drehachse der Fahrzeugklappe 4
- DP3: Drehachse zwischen dem Koppelelement und der Fahrzeugklappe
- DP4: Drehachse zwischen dem Koppelelement und der Ladedose
- x: Fahrzeuglängsrichtung
- y: Fahrzeugquerrichtung
- z: Fahrzeughochrichtung

## Patentansprüche

1. Fahrzeug (1), insbesondere elektrisch antreibbares Fahrzeug (1), mit einer Ladedose (6) zur Anordnung in einer Öffnung (5) einer Fahrzeugkarosserie (2), mit einer Fahrzeugklappe (4) zum Bedecken und Freigeben der Öffnung (5) sowie mit einer Antriebsvorrichtung (9) mit einer Antriebseinheit (10) zum Bewegen der Fahrzeugklappe (4) und der Ladedose (6), **dadurch gekennzeichnet,**
**dass** die Fahrzeugklappe (4) um eine karosseriefeste Drehachse (DP2) gegenüber der Öffnung (5) zwischen einer Geschlossenstellung, in der die Fahrzeugklappe (4) die Öffnung (5) bedeckt, und einer Offenstellung, in der die Fahrzeugklappe (4) die Öffnung (5) freigibt, im Inneren der Fahrzeugkarosserie (2) verschwenkbar ist,
wobei die Ladedose (6) um eine karosseriefeste Drehachse (DP1) zwischen einer Gebrauchsposition und einer Nichtgebrauchsposition im Inneren der Fahrzeugkarosserie (2) verschwenkbar ist,
und wobei die Ladedose (6) und die Fahrzeugklappe (4) über wenigstens ein Koppelelement (7) miteinander verbunden sind und das Koppelelement (7) jeweils mit der Ladedose (6) und mit der Fahrzeugklappe (4) drehbar in Wirkverbindung steht.

2. Fahrzeug nach Anspruch 1,
**dadurch gekennzeichnet, dass** die Antriebseinheit (10) an der Fahrzeugklappe (4) oder an der Ladedose (6) befestigt ist und das Koppelelement (7) im Bereich eines Drehgelenks rotatorisch antreibt, das das Koppelelement (7) und die Fahrzeugklappe (4) oder das Koppelelement (7) und die Ladedose (6) drehbar miteinander verbindet.

3. Fahrzeug nach Anspruch 1,
**dadurch gekennzeichnet, dass** die Antriebseinheit (10) am Koppelelement (7) befestigt ist und die Fahrzeugklappe (4) oder die Ladedose (6) im Bereich eines Drehgelenks rotatorisch antreibt, das das Koppelelement (7) und die Fahrzeugklappe (4) oder das Koppelelement (7) und die Ladedose (6) drehbar miteinander verbindet.

4. Fahrzeug nach Anspruch 1,
**dadurch gekennzeichnet, dass** die Antriebseinheit (10) an der Fahrzeugkarosserie (2) befestigt ist, über eine Kinematik mit dem Koppelelement (7) verbunden ist und das Koppelelement (7) rotatorisch antreibt, wobei der Antrieb der Antriebseinheit (10) vom Koppelelement (7) auf die Fahrzeugklappe (4) und auf die Ladedose (6) über ein Drehgelenk zwischen dem Koppelelement (7) und der Ladedose (6) sowie über ein Drehgelenk zwischen dem Koppelelement (7) und der Fahrzeugklappe (4) übertragen wird.

5. Fahrzeug nach wenigstens einem der vorstehend genannten Ansprüche,
**dadurch gekennzeichnet, dass** eine Verstellung der Ladedose (6) und eine Verstellung der Fahrzeugklappe (4) durch das Koppelelement (7) so aufeinander abgestimmt sind, dass die Ladedose (6) in der Offenstellung der Fahrzeugklappe (4) in der Gebrauchsposition und in der Geschlossenstellung der Fahrzeugklappe (4) in der Nichtgebrauchsposition anordenbar ist, wobei ein Abstand in Fahrzeugquerrichtung (y) zwischen einer Vorderseite der Ladedose (6), die einer Außenseite der Fahrzeugkarosserie (2) zugewandt ist, und der Außenseite der Fahrzeugkarosserie (2) in der Gebrauchsposition der Ladedose (6) kleiner ist als in der Nichtgebrauchsposition der Ladedose (6).

6. Fahrzeug nach wenigstens einem der vorstehend genannten Ansprüche,
**dadurch gekennzeichnet, dass** die karosseriefeste Drehachse (DP2) der Fahrzeugklappe (4) und die karosseriefeste Drehachse (DP1) der Ladedose (6) parallel zueinander verlaufen.

7. Fahrzeug nach wenigstens einem der vorstehend genannten Ansprüche,
**dadurch gekennzeichnet, dass** die karosseriefeste Drehachse (DP2) der Fahrzeugklappe (4) und die karosseriefeste Drehachse (DP1) der Ladedose (6) verschränkt zueinander verlaufen.

8. Fahrzeug nach wenigstens einem der vorstehend genannten Ansprüche,
**dadurch gekennzeichnet, dass** die Fahrzeugklappe (4) in der Geschlossenstellung und in der Offenstellung und die Ladedose (6) in der Gebrauchsposition und in der Nichtgebrauchsposition jeweils über eine Verriegelungseinheit haltbar sind.

9. Fahrzeug nach wenigstens einem der vorstehend genannten Ansprüche,
**dadurch gekennzeichnet, dass** die Wirkverbindungen und Positionen der Wirkverbindungen zwischen der Fahrzeugkarosserie (2), der Ladedose (6), der Fahrzeugklappe (4) und dem Koppelelement (7) so aufeinander abgestimmt sind, dass die Fahrzeugklappe (4) in der Geschlossenstellung und in der Offenstellung und die Ladedose (6) in der Gebrauchsposition und in der Nichtgebrauchsposition jeweils durch Übertotpunktlagen zwischen der Drehachse (DP2) der Fahrzeugklappe (4), der Wirkverbindung zwischen der Fahrzeugklappe (4) und dem Koppelelement (7), der Wirkverbindung zwischen der Ladedose (6) und dem Koppelelement (7) sowie der Drehachse (DP1) der Ladedose (6) verriegelt gehalten sind.

10. Fahrzeug nach wenigstens einem der vorstehend genannten Ansprüche,
**dadurch gekennzeichnet, dass** die Antriebsvorrichtung (9) derart selbsthemmend ausgeführt ist, dass die Fahrzeugklappe (4) in der Geschlossenstellung und in der Offenstellung und die Ladedose (6) in der Gebrauchsposition und in der Nichtgebrauchsposition von der Antriebsvorrichtung (9) gehalten werden, wenn der Antrieb der Antriebsvorrichtung (9) abgeschaltet ist.

11. Fahrzeug nach wenigstens einem der vorstehend genannten Ansprüche,
**dadurch gekennzeichnet, dass** die Fahrzeugklappe (4), die Ladedose (6) und/oder die Fahrzeugkarosserie (2) mit einer Dichteinheit (11, 12) ausgeführt ist/sind, die in der Geschlossenstellung der Fahrzeugklappe (4) sowie in der Gebrauchsstellung der Ladedose (6) einen Anlagebereich der Fahrzeugklappe (4) an der Fahrzeugkarosserie (2) und einen Anlagebereich der Ladedose (6) an der Fahrzeugkarosserie (2) abdichtet.

12. Fahrzeug nach wenigstens einem der vorstehend genannten Ansprüche,
**dadurch gekennzeichnet, dass** die Ladedose (6) und die Fahrzeugklappe (4) über zwei Koppelelemente (7) drehbar miteinander in Wirkverbindung stehen, wobei die Koppelelemente (7) jeweils seitlich mit der Ladedose (6) und mit der Fahrzeugklappe (4) drehbar verbunden sind.

13. Fahrzeug nach wenigstens einem der vorstehend genannten Ansprüche,
**dadurch gekennzeichnet, dass** die Drehachsen (DP1 bis DP4) in Fahrzeughochrichtung (z), in Fahrzeugquerrichtung (y) und/oder in Fahrzeuglängsrichtung (x) innerhalb der Fahrzeugkarosserie (2) verlaufen, die an den für die Verschwenkung der Ladedose (6) und die Fahrzeugklappe (4) zur Verfügung stehenden Bauraum angepasst ist, wobei die Ausrichtung der Drehachse (DP1) der Ladedose (6) in Abhängigkeit der Orientierung der Drehachse (DP2) der Fahrzeugklappe (4) erfolgt.
